# EUROPÄISCHE PATENTSCHRIFT

(11) **EP 1 608 229 B1**
(45) Veröffentlichungstag und Bekanntmachung des Hinweises auf die Patenterteilung: **25.04.2007**
(21) Anmeldenummer: 01954018.6
(22) Anmeldetag: 06.07.2001
(51) Int. Cl.: A23C 19/024, A23C 19/028, A01J 25/00

(54) **VERFAHREN UND VORRICHTUNG ZUM KONTINUIERLICHEN UND SCHNELLEN HERSTELLEN VON PROTEINGELSYSTEMEN, INSBESONDERE VON MILCHBASIERTEN GELSYSTEMEN BEI DER PRODUKTION VON KÄSE ODER KÄSEARTIGEN MASSEN**
METHOD AND DEVICE FOR THE CONTINUOUS AND RAPID PRODUCTION OF PROTEIN GEL SYSTEMS, IN PARTICULAR, OF MILK-BASED GEL SYSTEMS IN THE PRODUCTION OF CHEESE OR CHEESE-TYPE PRODUCTS
PROCEDE ET DISPOSITIF DE FABRICATION RAPIDE ET EN CONTINU DE SYSTEMES DE GELS PROTEIQUES, EN PARTICULIER DE SYSTEMES DE GEL A BASE DE LAIT LORS DE LA PRODUCTION DE FROMAGE ET DE PRODUITS DE TYPE FROMAGE

(43) Veröffentlichungstag der Anmeldung: 28.12.2005
(73) Patentinhaber: Emmi Schweiz AG, 6002 Luzern (CH)
(72) Erfinder: WINDHAB, Erich, Josef, CH-8261 Hemishofen (CH)
(74) Vertreter: Beyer, Rudi
(86) Internationale Anmeldenummer: PCT/EP2001/007775
(87) Internationale Veröffentlichungsnummer: WO 2003/003846

(56) Entgegenhaltungen:
- EP-A- 0 484 727
- AT-B- 273 638
- DE-A- 2 202 632
- DE-A- 2 638 307
- DE-A- 2 644 325
- DE-A- 3 636 625
- DE-A- 10 016 538
- US-A- 4 499 109

## Beschreibung

Die Erfindung betrifft ein Verfahren zum kontinuierlichen und schnellen Herstellen von milchbasierten Gelsystemen, bei der Produktion von Käse oder käseartigen Massen.

Des weiteren betrifft die Erfindung eine Vorrichtung zum Durchführen dieses Verfahrens.

### Stand der Technik

Die herkömmliche Erzeugung von milchbasierten Gelsystemen mit hohem Trockensubstanzgehalt findet sich beispielsweise in der Hartkäseherstellung. Die Käsereimilch wird dabei in einem ersten Schritt nach möglicherweise bereits vorab erfolgter thermischer Vorbehandlung der Milch (z. B. Pasteurisation, Fett- und Proteingehaltseinstellung, Zusatz von Salzen, Farbstoffen), mit sogenannten Starterkulturen (Mikroorganismenmischkulturen) versetzt, welche insbesondere Milchsäurebakterien beinhalten. Diese erzeugen im sogenannten Fermentations- oder Säuerungsschritt Milchsäure, welche zur pH-Absenkung der Käsereimilch führt. Die pH-Absenkung auf Werte ≤ ca. 6 ist Voraussetzung für die Dicklegung der Milch und die optimale Wirkung des Labenzyms (Chymosin). Nach der Säuerungsaktion erfolgt die Zugabe von Labferment/Chymosin (Enzym). Dies bewirkt die Dicklegung der Käsereimilch, das heißt, die Ausbildung einer Kaseingelstruktur.

In einem weiteren Prozeßschritt gemäß herkömmlicher Verfahrensweise wird der sog. Käsebruch (Kaseingel) in würfel- bzw. quaderförmige Stücke geschnitten, um den Abfluß von Molke zu erleichtern. Es wird bewußt Wert darauf gelegt, daß bei diesen Schneidevorgängen möglichst wenig "Feingut" (sog. Käsestaub) erzeugt wird. Derartiges Feingut repräsentiert im herkömmlichen Prozeß nicht mehr gelbildungsfähiges Material, das die Ausbildung einer kontinuierlichen Struktur des Produktes beeinträchtigen kann. Nach weitgehender Molkedrainage wird der Käsebruch in Formen gefüllt und dort unter definierten Druck und Temperaturbedingungen über mehrere Stunden sukzessive weiterkomprimiert. Dabei erfolgt die weitere Drainage von Molke bis der Endtrockenstoffgehalt bzw. die Endstruktur erreicht ist. Bei den meisten Hartkäsen erfolgt in einem nächsten Schritt das Salzen. Dabei finden diffusionsgesteuerte Transportvorgänge des Salzes in den Käse bzw. Wasser aus dem Käse auf einer mehrstündigen Zeitskala statt. Beim abschließenden Reifen erfolgt einerseits die Aromabildung auf Basis der ablaufenden mikrobiologischen Reifungsvorgänge. Verbunden damit erfolgt der Abschluß der Struktur- bzw. Texturausbildung.

Als besonders zeitaufwendige Prozeßschritte gelten in der beschriebenen Hartkäseherstellung :
- die Molkendrainage nach Schneiden des Käsebruchs
- die Druckverfestigung des in Formen gefüllten Käsebruchs unter weitergehender Molkedrainage
- die diffusionsgesteuerte Aufnahme von Salz im Salzbad.

Die Summe aller dieser Vorgänge nimmt bei der Hartkäseherstellung typischerweise 5 bis 24 Stunden in Anspruch. Der Abfluß von Molke aus dem gebildeten Kaseingelgerüst erfolgt gezielt weitgehend, da zum Teil der Einschluß der Molkenproteine zu Inhomogenitäten bzw. Textur- oder Konsistenz- und Aromafehlern im fertigen herkömmlichen Produkt führen kann.

Für die Herstellung von enzyminduzierten, milchbasierten Gelstrukturen mit hohem Trockensubstanzgehalt (35 bis 55 Prozent) sind bislang keine Verfahren bekannt, welche vom Endprodukttrockenstoffgehalt ausgehen, und unter derartigen Bedingungen ein mikrohomogenes elastisches Gelgerüst kontinuierlich erzeugen lassen.

Aus der DE 36 36 625 A1 ist ein Verfahren zum Herstellen eines fermentierten Milcherzeugnisses vorbekannt, wobei Milch einer Ultrafiltration unterzogen wird und das erhaltene Retentat fermentiert wird. Das mit einem Eiweißgehalt von 5 bis 8 %, einem Fettgehalt von 0,5 bis 5 % und einem Stickstoffgasgehalt von maximal 7 mg/kg versehene Retentat wird auf ein pH von 4,4 - 4,7 gesäuert, wonach das erhaltene Produkt derartigen Scherkräften unterzogen wird, daß eine homogene Masse erhalten wird mit einer Festigkeit von 10 bis 25, ausgedrückt in mm Eindringtiefe pro 10 Sekunden eines kegelförmigen Körpers mit einem Scheitelwinkel von 90° und einer Masse von 54,8 g.

Aus der AT 273 638 ist ein Verfahren zur vorzugsweise kontinuierlichen Käseherstellung aus Milch vorbekannt, nach welchem die Milch auf einen Feststoffgehalt von 13 bis 60 Gew.-% entwässert und zur Kaltbehandlung mit Lab abgekühlt wird, wonach Lab zugesetzt, die Milch zum Gerinnen aufgewärmt, die gebildete Masse in Stücke geteilt und gegebenenfalls vorliegende Molke entfernt wird, woraufhin die zum Gerinnen zu bringende Milch nach der Kaltbehandlung mit Lab auf die Gerinnungstemperatur direkt, entweder durch Einleitung von Dampf oder elektrisch durch Hochfrequenzbestrahlung, erhitzt wird. Die auf die Gerinnungstemperatur erhitzte Milch wird in einer Gerinnungskammer zum Gerinnen gebracht, um eine zusammenhängende Masse zu bilden. Die Temperatur der Käsemasse in der Gerinnungskammer wird je nach Art des herzustellenden Käses bei einem auf die Synärese geeigneten Wert gehalten. Die Milch kann auch direkt erhitzt werden, die während der Entwässerung auf eine Konzentration eingeengt wird, bei welcher deren Feststoffgehalt nach Entfernung der kristallisierten Lactose dem Feststoffgehalt der zu erhaltenden Käsemasse entspricht, wodurch die Verfahrensstufe der Molkeabtrennung nach der Verfahrensstufe des Gerinnens entfallen kann.

Aus der "Deutsche Molkerei-Zeitung", 1967, S. 704-707, ist ein Verfahren zur kontinuierlichen Käseherstellung mit Multitub-Käsefertigern vorbekannt. Dabei wird ausgeführt, daß zum kontinuierlichen Einlaben die Gerinnungszeit der Milch verkürzt werden soll. Hierfür sei vorgeschlagen worden: Vorsäuerung der Milch, enzymatische Vorbehandlung mit Lab und anderen Enzymen, Verwendung von Milch mit Milchpulverzusatz oder Verwendung eingedickter Milch als Käsereimilch. Man könne die kontinuierliche Gewinnung der Milch in Röhren mit beliebigen Durchmessern durchführen. In der Praxis seien jedoch stets große Zylinder verwendet worden, weil man nur bei großen Durchmessern eines Rohres, das heißt des Einlabungszylinders, die erforderliche Stundenleistung von 500 bis 5000 Liter erzielen könne. Die Verwendung großer Rohre oder Zylinder für die kontinuierliche Einlabung setze voraus, daß die Milch vor Eintritt in den Gerinnungszylinder sehr schnell mit einem Plattenerhitzer auf Einlabungstemperatur erwärmt werde, da indirekte Erhitzung der Milch im Einlabungszylinder selbst nicht möglich sei, weil die Wärme zu langsam bis zum Kern des Rohres vordringe. Die Verwendung von Einlabungszylindern mache es ferner notwendig, daß besondere Käsebruch-Entnahmevorrichtungen sowie Schneidvorrichtungen, die den Käsebruch in die üblichen Stücke unterteilten, entwickelt werden mußten. Wenn man durch Verwendung eingedickter Milch, enzymatischer Vorbehandlung in der Kälte und durch Vorsäuerung die Geschwindigkeit der Labgerinnung bis auf wenige Sekunden verkürze, so mache auch die Erhitzung der Milch im Plattenerhitzer Schwierigkeiten, weil zu früh Gerinnungserscheinungen auftreten könnten. Deshalb habe man ein Verfahren entwickelt, bei dem die Erwärmung kalt eingelabter, eingedickter Milch durch Vermischung mit Heißwasser zu erzielen sei. Wenn man hierfür Rohre mit entsprechender Leistung verwende, so ergäben sich zwar bei Vermischen von eingelabter Milch und Heißwasser Käsebruchstücke und -körner, jedoch seien diese sehr ungleichmäßig, weil die Unterteilung nur durch Flüssigkeitswirbel erfolge. Entwickelt worden sei auch ein Verfahren und eine Vorrichtung für die kontinuierliche Käseherstellung, bei welchem die Dicklegung der Milch und die Käsebruchbearbeitung in Röhren und Kanälen erfolge, deren Durchmesser bzw. deren Höhe der gewünschten Kantenlänge des Bruchstückes entspreche. Eine neue Methode zur kontinuierlichen Einlabung sei allerdings nicht gefunden worden. Die Arbeit des Käsefertigers übernehmen Rohre mit Heizmantel. Für Versuchszwecke seien für die kontinuierliche Einlabung auch kleinere Röhren verwendet worden.

Aus der DE 26 44 325 ist ein Verfahren zur kontinuierlichen Herstellung von Käse aus einer als Vorkäse bezeichneten Flüssigkeit vorbekannt, die durch Zumischen von üblichen Zusatzstoffen zu einem Rückstand erhalten worden ist und der bei der Ultrafiltration von Milch oder eines beliebigen anderen Milchproduktes anfällt, das anschließend in Käse umgewandelt werden kann. Man erhitzt den Vorkäse, einlabt ihn und führt ihn in eine langgestreckte Gerinnungszone ein. Als Vorkäse wird ein Käse verwendet, dessen Eigenschaften wie Gehalt an Trockensubstanz und Fettstoffgehalt im Trockenextrakt im wesentlichen identisch mit denen des herzustellenden Käses sind. Die in die Gerinnungszone eingeführte Menge des eingelabten Käses wird so geregelt, dass der Vorkäse an jeder Stelle mit laminarer Strömung fließt und die Gerinnungszone bei einer Temperatur gehalten wird, die so unter der Temperatur der eintretenden Flüssigkeit liegt, dass beim Gleichgewicht eine im wesentlichen ebene und mit einem Querschnitt des Stromes zusammenfallende Gerinnungsfront ausgebildet und in dieser Weise das Gefüge der eingestellten Käsemasse homogenisiert wird.

### Aufgabe

Der Erfindung liegt die Aufgabe zugrunde, ein Verfahren der vorausgesetzten Gattung dahingehend zu verbessern, daß die Nachteile des Standes der Technik restlos beseitigt werden und die Verfahrensweise erheblich beschleunigt abläuft.

Des weiteren liegt der Erfindung die Aufgabe zugrunde, eine zur industriellen Anwendung geeignete Vorrichtung zur Durchführung des erfindungsgemäßen Verfahrens zu schaffen.

### Lösung der Aufgabe hinsichtlich des Verfahrens

Diese Aufgabe wird durch die in **Patentanspruch 1** wiedergegebenen Merkmale gelöst.

### Einige Vorteile

Das erfindungsgemäße Verfahren erlaubt die Ausbildung einer mikrohomogenen Gelstruktur mit Endtrockensubstanzgehalt von 35 bis 55 Prozent innerhalb eines Zeitraumes von zwei bis zehn Minuten. Der anschließende Ausformprozeß benötigt maximal weitere zehn Minuten, bezogen auf den Gelbildungsprozeß. Eine Molkendrainage erfolgt nicht. Somit entstehen auch keine Molkenproteinverluste. Der Einbau der Molkenproteine in die Kaseingelstruktur kann aufgrund der intensiven Scherströmung im Gelbildungsschritt (ausgeführt in einem später beschriebenen Gelbildungsreaktor) derart mikrohomogen erfolgen, so daß keine Texturinhomogenitäten und daraus resultierende Textur- und bzw. Konsistenzfehler resultieren.

Die durch Scherkrafteinwirkung beschleunigte Gelreaktion läßt innerhalb von zwei bis zehn Minuten ein sehr kompaktes, elastisches und formbares Gel erzeugen. Bei herkömmlichen Verfahren nimmt der Gelbildungs- und Aufkonzentrationsprozeß bis zum Erreichen der ausgeformten Produktstruktur Zeitspannen von ≥ fünf bis acht Stunden in Anspruch.

Im einzelnen besteht das erfindungsgemäße Verfahren aus folgenden Prozeßschritten:
a) Vorkonzentration der Milch- bzw. Milchproteindispersion
b) Ansäuren/Fermentieren
c) Pasteurisation
d) Einmischung von Labenzym/Chymosin
e) Gelbildungsreaktion im Hochscherströmungsfeld
f) Kontinuierliches Ausformen des Gels
g) Schneiden und Verpacken
h) Reifen (z. B. auch Folienreifung)

Im folgenden werden diese Prozeßteilschritte detailliert beschrieben.

### Zu a)

Der Konzentrationsschritt kann sowohl mittels Membranverfahren (Mikro-/Ultrafiltration), Vakuumverdampfung als auch durch Einmischen von Milchpulver mittels Dispergiervorrichtung oder mittels einer Kombination dieser drei Teilschritte erfolgen. Die einzustellende Feststoffkonzentration beträgt vorzugsweise 35 bis 55 Gewichtsprozent.

### Zu b)

Beim Ansäuern bzw. der Fermentation mit Starterkulturen (Milchsäurebakterien) ist die hohe Trockenstoffkonzentration zu berücksichtigen. Durch geeignete Starterkulturen kann unter entsprechenden Konzentrationsbedingungen effizient, das heißt innerhalb von zwei bis vier Stunden, eine pH-Absenkung auf Werte unter 6 erreicht werden.

### Zu c)

Im erfindungsgemäßen Verfahren wird gegebenenfalls die Wärmebehandlung in einem vorgeschalteten, oder nach der Fermentation erfolgenden Pasteurisationsschritt variiert (z. B. > 70° C / < 20 Sekunden). Dies schafft die Möglichkeit den Denaturierungsgrad des Molkenproteinanteils gezielt zu beeinflussen und damit einen ebenso gezielten Einfluß auf die Eigenschaften der resultierenden Gelstruktur zu nehmen.

### Zu d)

Die kontinuierliche mikrohomogene Einmischung von Labenzym in das wärmebehandelte, gesäuerte Konzentrat erfolgt erfindungsgemäß mit Hilfe statischer Mischelemente direkt in die Produktrohrleitung, in welche das Labenzym/Chymosin kontinuierlich zudosiert wird.

### Zu e)

Der Gelbildungsreaktor wird erfindungsgemäß bevorzugt als sog. kontinuierlicher Engspaltreaktor ausgeführt. Der enge Spalt wird gebildet zwischen einem Gehäuse mit mehreren zylindrischen Bohrungen bzw. einer zylindrischen Bohrung und in diesen Bohrungen (bzw. Bohrung) rotierenden Element(en). Die rotierenden Elemente besitzen vorzugsweise wandschabende Aufbauten (z. B. Messer, Schaber, helikale Schneckenbänder). In einer speziellen Ausführungsform mit zwei rotierenden Elementen und aufgesetzten helikalen Schneckenbändern wird ein Engspalt-Doppelschneckenextruder ausgebildet. In einer anderen Ausführungsform kann ein rotierendes Element mit Wandschabern und gegebenenfalls Förderelementen (z. B. mitrotierende angestellte Strömungsleitbleche) ausgestattet sein. Von entscheidender Wichtigkeit sind im erfindungsgemäßen Gelbildungsreaktor:
a) die über den gesamten Gelbildungsreaktor lokal weitestgehend konstante ausgeprägte Scherbeanspruchung mit Schergeschwindigkeiten von ca. 50 bis 1000 1 /s;
b) das enge Verweilzeitspektrum im Gelbildungsreaktor bei mittleren Verweilzeiten von 0,5 bis 5 Minuten;
c) der optimiert schnelle und gleichmäßige lokale Wärme- und Stoffübergang (für Gelbildungs/Enzymreaktion).

Diese Kriterien werden vom erfindungsgemäß entwickelten Engspaltgelbildungsreaktor optimal abstimmbar erfüllt.

### Zu f)

Die Ausformung der im Gelreaktor gebildeten Gelmatrix erfolgt am Austritt des Engspaltgelbildungsreaktors in einer ohne Absätze bzw. Kanten ausgebildeten konischen Auslaufzone, welche sich in einem Ausformrohr fortsetzt. Durch Wandreibung bzw. Hydrostatik (bei Senkrechtführung) wird in einem Ausformrohr Druck aufgebaut. Dieser führt zur verbesserten Verdichtung und homogenen Strukturbildung.

Die Ausformung der Gelmatrix erfolgt in einem von den Prozeßparametern abhängigen Zeitfenster erfindungsgemäß derart, daß das Gel glatt und ohne Bruch Formdüse und Ausformrohr passiert. Dies setzt voraus, daß die Gelbildung im Gelbildungsreaktor noch nicht soweit vorangeschritten ist, daß das Gel eine Steifigkeit erreicht, welche die bruchfreie Passage des Formschrittes nicht mehr gewährleisten läßt. Andererseits muß die Gelbildung bereits soweit vorangeschritten sein, daß nach dem Formschritt kein Zerfließen der Gelmatrix mehr unter dem Eigengewicht des Produktes erfolgt.

### Zu g)

Die ausgeformte Gelmatrix kann geschnitten bzw. geformt und verpackt werden.

### Zu h)

Der Reifungsvorgang kann sowohl in der Verpackung (Folienreifung) als auch entsprechend herkömmlichem Verfahren wie bei Hartkäse in klimakontrollierten Reifungskammern erfolgen oder auch gänzlich entfallen.

### Weitere erfinderische Ausgestaltungen

Weitere erfinderische Ausgestaltungen sind in den **Patentansprüchen 2** und **3** beschrieben.

### Lösung der Aufgabe hinsichtlich der Vorrichtung

Diese Aufgabe wird durch die in **Patentanspruch 4** wiedergegebenen Merkmale gelöst.

### Einige Vorteile

Eine erfindungsgemäße Vorrichtung ermöglicht im industriellen Bereich innerhalb kürzester Zeit die kontinuierliche, sehr schnelle Herstellung von milchbasierten Gelsystemen zur Produktion von Käse oder käseartigen Massen.

### Weitere erfinderische Ausgestaltungen

Weitere erfinderische Ausgestaltungen sind in den **Patentansprüchen 5** bis **19** beschrieben.

In der Zeichnung ist die Erfindung - teils schematisch - beispielsweise veranschaulicht. Es zeigen:
- Fig. 1: in Form eines Blockdiagramms einen beispielsweise erfinderischen Verfahrensablauf, und
- Fig. 2: einen schematischen Längsquerschnitt durch eine Vorrichtung gemäß der Erfindung.

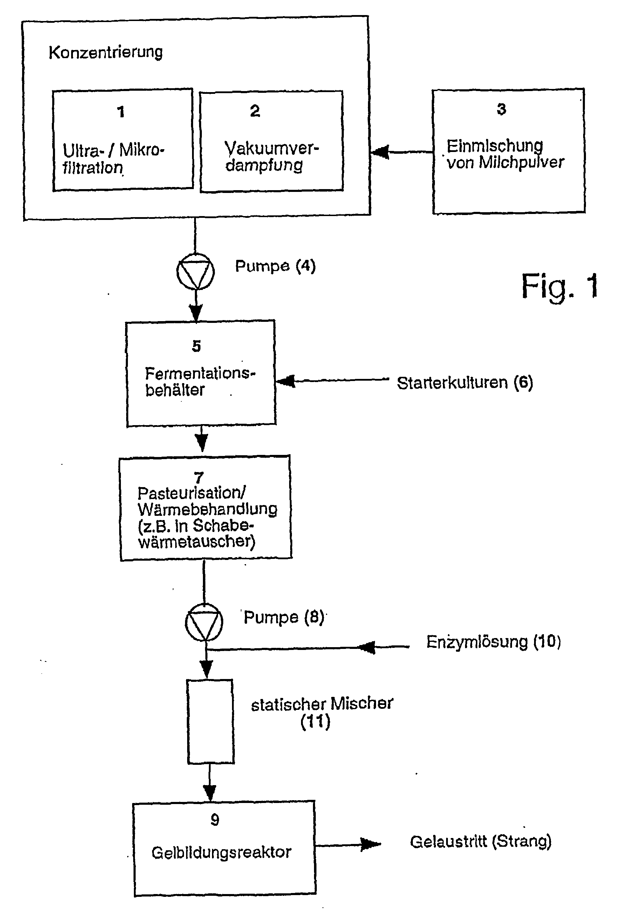

Fig. 1 zeigt eine Übersicht des Verfahrensschemas. In einem Schritt wird ein Milchkonzentrat bzw. Milchproteinkonzentrat hergestellt. Dies erfolgt beispielsweise mittels Membranverfahren 1 (Ultrafiltration, Mikrofiltration) und/oder Vakuumverdampfung in einer Vakuumverdampfungsanlage 2. Zusätzlich wird das Einmischen von Milchpulver 3 in Betracht gezogen. Dieses Milch- bzw. Milchproteinkonzentrat wird mittels Pumpe 4 einem Fermentationsbehälter 5 zugeführt. Im Fermentationsbehälter 5 erfolgt unter Zugabe von Starterkulturen 6 die Initiierung einer Säuerungsreaktion (Milchsäurebildung durch Milchsäurebakterien).

Für die fermentative Ansäuerung werden Starterkulturen eingesetzt, welche möglichst kurze Fermentationszeiten in Anspruch nehmen.

Dem Fermentationsschritt nachgeschaltet kann ein Pasteurisationsschritt in einem Schabewärmetauscher 7 oder mittels alternativer Erhitzung (Ohmsche Verfahren, Mikrowelle) sein, sofern z. B. eine selektive Abtötung von Milchsäurebakterien erfolgen soll. Ferner kann in diesem Schritt eine Beeinflussung der Molkenproteinstruktur durch den Wärmeeintrag realisiert werden. Dies hat zur Folge, daß ein unterschiedlicher "Einbau" der Molkenproteine in das Kaseingelgerüst erfolgt, was zu unterschiedlicher Textur des Endproduktes gezielt beiträgt. Das angesäuerte und gegebenenfalls pasteurisierte Konzentrat wird dann mittels Pumpe 8 kontinuierlich einem als Hochschergelierungsreaktor ausgebildeten Gelbildungsreaktor 9 zugeführt. Vor Eintritt in den Gelbildungsreaktor 9 wird dem Proteinkonzentrathauptstrom eine Enzymlösung 10 kontinuierlich zudosiert und im Hauptstrom mittels eines statischen Mischers 11 homogen eingemischt. Die Verweilzeit des Konzentrats nach Einmischung der Enzymlösung 10, welche die Gelbildung zu initiieren beginnt, bis zum Eintritt in den Gelbildungsreaktor 9 wird erfindungsgemäß in Abstimmung mit der Art des Enzyms sowie dem über die Ansäuerung eingestellten pH-Wert und die Temperatur (bevorzugt zwischen 40 und 42° C) auf 0,5 bis drei Minuten eingestellt. Im Gelbildungsreaktor 9 erfolgt im engen (1 - 10 mm) Rotationsströmungsspalt eine ausgeprägte Scherbeanspruchung des gebildeten Konzentrates. Die Gelbildungsreaktion wird dabei durch die Scherung gezielt angeregt.

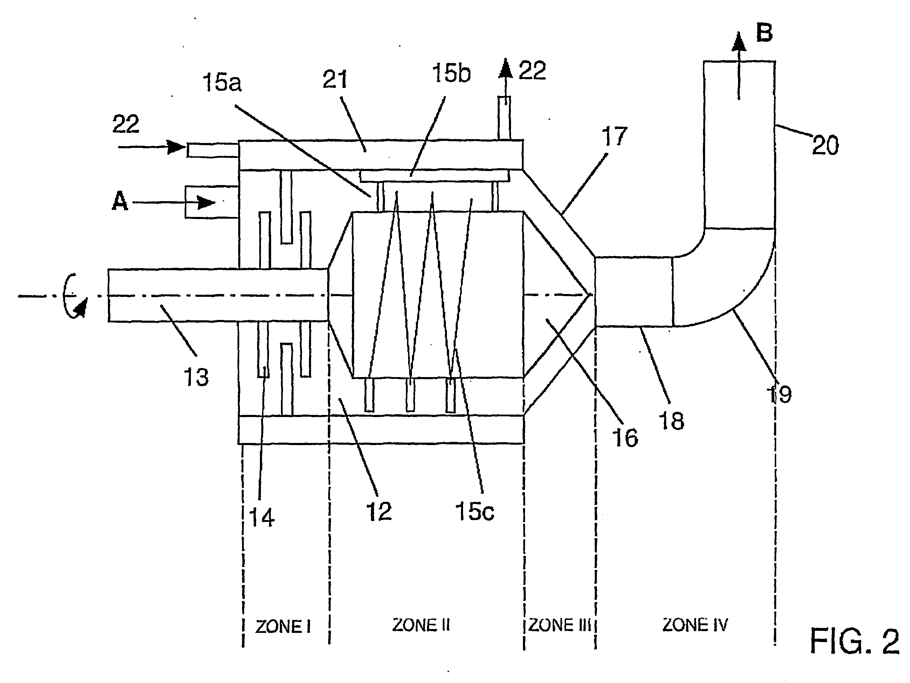

Fig. 2 zeigt eine schematische Detaildarstellung des Gelbildungsreaktors 9. Dieser ist bevorzugt in vier Zonen (I - IV) eingeteilt. Der Innenraum trägt das Bezugszeichen 12.

Zone 1 ist eine Verweil-/Mischzone, in welche das Konzentrat in Richtung des Pfeiles eintritt (A). Hier bewirken auf der rotierenden Welle 13 montierte Einbauten 14 (Stifte, Blattelemente, Schaufeln) eine intensive Vermischung des Konzentrates mit dem vor Eintritt in den Gelbildungsreaktor 9 zudosierten Chymosin.

In Zone II erfolgt die intensive Scherbehandlung im konzentrischen Zylinderspalt 15a. Diese Zone II kann gegebenenfalls auch mit wandschabenden Einbauten in Form von Schabemessern 15b oder helikalen Schnecken-/Wendelelementen 15c versehen sein, und besitzt einen Temperiermantel 21, welcher mit einem Temperierfluid 22 (z. B. Wasser) auf +/- 0,5° C genau geregelt kontinuierlich durchströmt wird.

Zone III bezeichnet die Austrittszone aus dem Gelbildungsreaktor 9. Hier verjüngt sich der rotierende Einbau derart, daß Strömungstotzonen vermieden werden.

Dies wird beispielsweise dadurch erreicht, daß sowohl das rotierende Teil 16 als auch das Gehäuse 17 eine konzentrische, konisch verjüngende Form ausbilden.

Das aus dem Gelbildungsreaktor 9 austretende gelierte Stoffsystem B wird in der Zone IV, welche nicht Teil des Gelbildungsreaktors 9 ist, in Strangform ausgeformt. Zone IV besteht bevorzugt aus einem waagerecht angeordneten Austrittsrohr 18, einem 90° Rohr-/Kanalbogen 19 mit großem Radius (R>5D) und einem senkrecht angeordneten Endrohr/-kanalstück 20. Letzteres hat bevorzugt eine Länge von 10-60xD, um einen hydrostatischen Druckaufbau zu gewährleisten, welcher zur die Struktur vergleichmäßigenden Verfestigung des Gelstranges beiträgt. '

Grundsätzlich können Zonen I - III des Gelbildungsreaktors 9 auch auf bis zu drei separaten Wellen in ebenso separaten getrennt temperierten Gehäusen angeordnet sein.

### Bezugszeichenliste

- 1: Ultrafiltration, Mikrofiltration, Membranverfahren
- 2: Vakuumverdampfung
- 3: Milchpulver
- 4: Pumpe
- 5: Fermationsbehälter, Fermentationsvorrichtung
- 6: Starterkulturen
- 7: Pasteurisierungsbehälter, Pasteurisierungsvorrichtung, Schabewärmetauscher
- 8: Pumpe
- 9: Gelbildungsreaktor, Hochschergelierungsreaktor
- 10: Enzymlösung
- 11: Mischer, statischer
- 12: Innenraum des Gelbildungsreaktors 9
- 13: Welle
- 14: Einbauten
- 15: Schabemesser, Scherelement
- 15a: Zylinderspalt, konzentrischer
- 15b: Schabemesser, Scherelement
- 15c: Schnecken-/Wendelelemente, Scherelemente
- 16: Teil, rotierendes
- 17: Gehäuse
- 18: Austrittsrohr, Austrittskanal
- 19: Radius
- 20: Kanalstück, Rohr
- 21: Temperiermantel
- 22: Temperierfluid

- A: Richtungspfeil, Förderungsrichtung
- B: Stoffsystem, das aus Gelbildungsreaktor austritt

- I: Verweil-/Mischzone
- II: Zone der intensiven Scherbehandlung, Hochscherzone
- III: Austrittszone
- IV: Ausformungszone

## Patentansprüche

1. Verfahren zum kontinuierlichen und schnellen Herstellen von milchbasierten Gelsystemen bei der Produktion von Käse oder käseartigen Massen, mit folgenden Verfahrensschritten:
a) Vorkonzentration der Milch- bzw. Milchproteindispersion auf eine Feststoffkonzentration von 30 bis 55 Gewichtsprozent vornehmlich auf Endprodukttrockensubstanz;
b) wobei Starterkulturen (6) zur fermentativen Säuerung eingemischt werden, wodurch eine pH-Absenkung auf Werte unter 6 eingestellt wird;
c) mit anschließender Wärmebehandlung (7);
d) anschließender kontinuierlicher Zudosierung einer Enzymlösung (10), wobei die Enzymlösung (10) in das wärmebehandelte, gesäuerte Milch- bzw. Milchproteinkonzentrat mit Hilfe statischer Mischelemente (11) vorgenommen wird;
e) Einhaltung einer von der Art des einzumischenden Enzyms (10) abhängigen Wartezeit und Einbringung des angesäuerten und wärmebehandelten Konzentrats in einen Gelbildungsreaktor (9);
f) das Milch- bzw. Milchproteinkonzentrat wird in dem Gelbildungsreaktor (9) 0,5 bis 5 Minuten einer lokal weitestgehend konstant ausgeprägten, gleichmäßigen Hochscherbeanspruchung mit Schergeschwindigkeiten von 50 bis 1000 1/s unterworfen;
g) woraufhin anschließend nach dieser Verweilzeit im Gelbildungsreaktor (9) das aus diesem austretende gelierte Stoffsystem kontinuierlich und schonend ausgebracht und zwischengelagert und/oder portioniert und verpackt und einem Reifeprozess zugeführt wird.

2. Verfahren nach Anspruch 1, **dadurch gekennzeichnet, daß** die Vorkonzentration mittels Membranverfahren (Mikro-/Ultrafiltration), und/oder Vakuumverdampfung und/oder durch Einmischen von Milchpulver mittels Dispergieren vorgenommen wird.

3. Verfahren nach einem der vorhergehenden Ansprüche, **dadurch gekennzeichnet, dass** das Gel aus dem Gelbildungsreaktor (9) als Strang glatt und ohne Bruch kontinuierlich ausgeformt wird.

4. Vorrichtung zur kontinuierlichen Herstellung von enzyminduzierten Milchproteingelen mit einer Ultrafiltrationsanlage (1) und/oder einer Vakuumverdampfungsanlage (2), die über eine Rohrleitung mit einem Fermentationsbehälter (5) verbunden sind, eine Verdrängerpumpe für die Konzentratsförderung zu diesem Fermentationsbehälter (5) vorgesehen ist, und der Fermentationsbehälter (5), welcher sowohl mit einer Vorrichtung für schonendes Rühren als auch für das Dispergieren ausgestattet ist, und ebenso eine Vorrichtung zur Zudosierung von Pulverkomponenten (Milchpulver, Salz, Gewürze) als auch fluiden Komponenten zur Konzentratansäuerung aufweist, und dieser Behälter über eine weitere Verbindungsrohrleitung mit einem kontinuierlichen Gelbildungsreaktor (9) verbunden ist, der drei funktionelle Zonen, eine Verweil-/Mischzone (1), eine Hochscherzone (II) mit geeigneten Scherelementen (15a, 15b, 15c) und eine Austrittszone (III) aufweist, wobei vor Eintritt in den Gelbildungsreaktor (9) diese Rohrzuleitung mit einer Seitenstromzudosierung für Enzymlösung, einer entsprechenden Dosierpumpe sowie einem statischen Mischer (11) zur Enzymeinmischung in das angesäuerte Milchkonzentrat versehen ist und ferner dem Gelbildungsreaktor (9) eine Gelausformvorrichtung nachgeschaltet bzw. mit diesem gekoppelt ist.

5. Vorrichtung nach Anspruch 4, **dadurch gekennzeichnet, daß** der Gelbildungsreaktor (9) eine Scherzone (II) aufweist, welche durch ein zylindrisches Gehäuse und wenigstens ein rotierendes Element zentrisch oder exzentrisch angeordnet im Gehäusezylinder gebildet wird und außerdem mitrotierende wandschabende und/oder axial fördernde Einbauten aufweist.

6. Vorrichtung nach Anspruch 4 oder 5, **dadurch gekennzeichnet, daß** im Gelbildungsreaktor (9) die drei funktionellen Zonen (I) - (III) **dadurch** erzeugt werden, daß im Gehäusezylinder mit konstantem Zylinderinnendurchmesser ein rotierendes Innenteil installiert wird, welches über der Länge (axial) definierte Durchmesseränderungen aufweist.

7. Vorrichtung nach einem der Ansprüche 4 - 6, **dadurch gekennzeichnet, daß** das rotierende Innenteil in der Verweil-/Mischzone (1) einen kleinen Kerndurchmesser besitzt und Mischelemente in Stift- oder Blattform aufweist, welche eine radiale Orientierung besitzen und sofern sie Rechteckquerschnitt aufweisen (Blattform) gegenüber der Längsachse des rotierenden Elementes derart angestellt sind, daß bei Rotation eine Rückströmungskomponente erzeugt wird und damit eine homogene Rückvermischung in Zone I (Verweil-/Mischzone) des Gelbildungsreaktors (9) resultiert.

8. Vorrichtung nach Anspruch 5 oder 6, **dadurch gekennzeichnet, daß** in der Hochscherzone (II) des Gelbildungsreaktors (9) ein enger konzentrischer Zylinderspalt gebildet wird und zusätzlich mit an der Außenwand schabenden bzw. mit engem Wandspalt mitrotierenden Elementen ausgestattet ist, wobei diese Elemente die Form von Schabemessern, Schneckenstegen oder wendelartigen Geometrien aufweisen können.

9. Vorrichtung nach einem der Ansprüche 5, 6 oder 8, **dadurch gekennzeichnet, daß** der Scherspalt Höhen von ≥ 1 mm und ein Radienverhältnis Ri/Ra von ≥ 0,5 aufweist.

10. Vorrichtung nach einem der Ansprüche 5, 6, 8 oder 9, **dadurch gekennzeichnet, daß** das innere rotierende Element in der Austrittszone (III) des Gelbildungsreaktors (9) einen konisch bis zu einer Spitze linear oder konkav/konvex verjüngenden Querschnitt besitzt.

11. Vorrichtung nach Anspruch 10, **dadurch gekennzeichnet, daß** die endseitige Spitze des inneren rotierenden Elementes eine Durchmesserdistanz des Gehäuseinnenzylinders vor dem konstanten Ausformrohrquerschnitt angeordnet ist.

12. Vorrichtung nach einem der Ansprüche 5 - 11, **dadurch gekennzeichnet, daß** das Außengehäuse in der Austrittszone (III) einen konisch linear oder konvex/konkav verengenden Innenquerschnitt aufweist, welcher mit der Kontur des rotierenden Innenteils einen in der Weite konstanten Spalt bis zum Erreichen des Querschnittes des Ausformzone (IV) realisiert.

13. Vorrichtung nach einem der Ansprüche 5 bis 12, **dadurch gekennzeichnet, daß** ein Austrittsrohr (18) mit konstantem Durchmesser an die Austrittszone (III) des Gelbildungsreaktors (9) derart anschließt, daß keine scharfen Kanten im Übergangsbereich zwischen Konus und Rohr entstehen.

14. Vorrichtung nach Anspruch 13, **dadurch gekennzeichnet, daß** das Austrittsrohr (18) eine beliebige Querschnittsform besitzt und als minimale Länge das Zehnfache des mittleren Durchmessers dieses Rohres aufweist.

15. Vorrichtung nach Anspruch 14, **dadurch gekennzeichnet, daß** das Austrittsrohr (18) in großem Radius (R ≥ 5xD) einen 90°-Bogen (19) nach oben beschreibt und der Querschnitt eines an den Rohrbogen (19) anschließenden geraden Teiles des Rohres (20), welches eine Mindestlänge von 10xD bis zu einer Länge von 60xD besitzt und eine Gelverdichtung durch hydrostatischen Druckeinfluß aufgrund des Geleigengewichtes in der Ausformzone bewirken läßt, eine Form aufweist, welche der Gelstrangquerschnitt annehmen soll.

16. Vorrichtung nach einem der Ansprüche 5-15, **dadurch gekennzeichnet, daß** der Gelbildungsreaktor (9) ein doppelwandiges Gehäuse aufweist, welches das zylindrische bzw. einseitig konische Reaktionsvolumen umgibt, und dieser Doppelmantel von einem Temperierfluid kontinuierlich durchströmt werden kann.

17. Vorrichtung nach einem der Ansprüche 13 - 16, **dadurch gekennzeichnet, daß** das Austrittsrohr (18), 90° Bogen (19) und Rohr (20) einen fluidtemperierbaren Doppelmantel besitzt.

18. Vorrichtung nach einem der Ansprüche 5 - 17, **dadurch gekennzeichnet, daß** die Zonen (I - III) des Gelbildungsreaktors (9) in maximal drei getrennten Stufen mit jeweils einem entsprechenden rotierenden Element und einem temperierten Gehäuse ausgebildet werden.

19. Vorrichtung nach einem der Ansprüche 5-17, **dadurch gekennzeichnet, daß** mehrere nebeneinander angeordnete rotierende Elemente in einem entsprechend angepaßten Gehäuse in den Zonen (I - III) installiert sind.

## Claims

1. Process for the continuous and rapid preparation of milk-based gel systems in the production of cheese or caseous compositions, with the following process steps:
a) pre-concentration of the milk or milk protein dispersion to a solids concentration of from 30 to 55 per cent by weight, chiefly to the end product dry substance;
b) starter cultures (6) being mixed in for fermentative acidification, as a result of which a lowering of the pH to values below 6 is established;
c) with subsequent heat treatment (7);
d) subsequent continuous metering in of an enzyme solution (10), the enzyme solution (10) being taken into the heat-treated, acidified milk or milk protein concentrate with the aid of static mixing elements (11);
e) waiting for a period of time depending on the nature of the enzyme (10) to be mixed in and introduction of the acidified and heat-treated concentrate into a gel formation reactor (9);
f) the milk or milk protein concentrate is subjected to uniform high shear stresses, which are locally at a largely constant level, at shear rates of from 50 to 1,000 1/s in the gel formation reactor (9) for 0.5 to 5 minutes;
g) after which, after this dwell time in the gel formation reactor (9), the gelled substance system emerging from this is discharged continuously and gently and intermediately stored and/or divided into portions and packaged and fed to a ripening process.

2. Process according to claim 1, **characterized in that** the pre-concentration is carried out by means of membrane processes (micro-/ultrafiltration) and/or vacuum evaporation and/or by mixing in milk powder by means of dispersing.

3. Process according to one of the preceding claims, **characterized in that** the gel from the gel formation reactor (9) is shaped continuously as a strand, smoothly and without breaking.

4. Device for the continuous preparation of enzyme-induced milk protein gels, having an ultrafiltration unit (1) and/or a vacuum evaporation unit (2), which are connected via a pipeline to a fermentation tank (5), a displacement pump is provided for conveying the concentrate to this fermentation tank (5), and the fermentation tank (5), which is equipped with a device both for gentle stirring and for dispersing, also has a device for metering in powder components (milk powder, salt, seasoning) as well as fluid components for acidifying the concentrate, and this tank is connected via a further connecting pipeline to a continuous gel formation reactor (9) which has three functional zones, a dwell/mixing zone (I), a high shear zone (II) with suitable shearing elements (15a, 15b, 15c) and an exit zone (III), this feed pipeline being provided, before entry into the gel formation reactor (9), with a side stream metering for enzyme solution, a corresponding metering pump and a static mixer (11) for mixing the enzyme into the acidified milk concentrate, and furthermore a gel shaping device is located downstream of the gel formation reactor (9) or is coupled to this.

5. Device according to claim 4, **characterized in that** the gel formation reactor (9) has a shear zone (II) which is formed by a cylindrical housing and at least one rotating element arranged centrally or eccentrically in the housing cylinder, and furthermore has co-rotating wall-scraping and/or axially conveying built-in parts.

6. Device according to claim 4 or 5, **characterized in that** in the gel formation reactor (9) the three functional zones (I) - (III) are produced **in that** a rotating inner part which has (axially) defined changed in diameter over the length is installed in the housing cylinder with a constant cylinder internal diameter.

7. Device according to one of claims 4 - 6, **characterized in that** the rotating inner part has a small core diameter in the dwell/mixing zone (I) and has mixing element in pin or blade form which have a radial orientation and, if they have a rectangular cross-section (blade form), are set with respect to the longitudinal axis of the rotating element such that on rotation a back-flow component is generated and a homogeneous back-mixing thus results in zone I (dwell/mixing zone) of the gel formation reactor (9).

8. Device according to claim 5 or 6, **characterized in that** a narrow concentric cylinder gap is formed in the high shear zone (II) of the gel formation reactor (9) and is additionally equipped with elements which scrape on the outer wall or co-rotate with a narrow wall gap, it being possible for these elements to have the shape of scraping blades, screw flights or helical geometries.

9. Device according to one of claims 5, 6 or 8, **characterized in that** the shear gap has heights of ≥ 1 mm and a radii ratio Ri/Ro of ≥ 0.5

10. Device according to one of claims 5, 6, 8 or 9, **characterized in that** the inner rotating element has a cross-section which narrows conically to a tip linearly or concavely/convexly in the exit zone (III) of the gel formation reactor (9).

11. Device according to claim 10, **characterized in that** the tip on the end of the inner rotating element is arranged a diameter distance of the housing inner cylinder before the constant shaping pipe cross-section.

12. Device according to one of claims 5 - 11, **characterized in that** the outer housing has an internal cross-section which narrows conically linearly or convexly/concavely in the exit zone (II) and which, with the contour of the rotating inner part, realizes a gap of constant width until the cross-section of the shaping zone (IV) is reached.

13. Device according to one of claims 5 to 12, **characterized in that** an exit pipe (18) of constant diameter connects to the exit zone (III) of the gel formation reactor (9) such that no sharp edges are formed in the transition region between the cone and pipe.

14. Device according to claim 13, **characterized in that** the exit pipe (18) has any desired cross-section shape and has as the minimum length ten times the average diameter of this pipe.

15. Device according to claim 14, **characterized in that** the exit pipe (18) describes a 90 ° bend (19) upwards in the large radius (R ≥ 5 x D), and the cross-section of a straight part of the pipe (20) adjacent to the pipe bend (19), which has a minimum length of 10 x D up to a length of 60 x D and effects compaction of the gel by hydrostatic pressure due to the gel's own weight in the shaping zone, has a shape which the gel strand cross-section is to assume.

16. Device according to one of claims 5-15, **characterized in that** the gel formation reactor (9) has a double-walled housing which surrounds the reaction volume, which is cylindrical or conical on one side, and a temperature control fluid can flow continuously through this double-walled jacket.

17. Device according to one of claims 13 - 16, **characterized in that** the exit pipe (18), 90 ° bend (19) and pipe (20) has a double-walled jacket which can be temperature-controlled by a fluid.

18. Device according to one of claims 5 - 17, **characterized in that** the zones (I - III) of the gel formation reactor (9) are constructed in a maximum of three separate stages with in each case a corresponding rotating element and a temperature-controlled housing.

19. Device according to one of claims 5 - 17, **characterized in that** several rotating elements arranged side by side are installed in an appropriately adapted housing in the zones (I - III).

## Revendications

1. Procédé destiné à la fabrication continuelle et rapide de systèmes de gels à base de lait, lors de la production de fromage ou de pâtes caséeuses, comprenant les étapes suivantes :
a) Préconcentration de la dispersion lactique et/ou de la dispersion de protéines lactiques sur une concentration de matières solides de 30 à 35 pour cent pondéraux, principalement sur la substance sèche du produit final ;
b) Sachant que des cultures de démarrage (6) sont incorporées pour obtenir une acidulation fermentative permettant d'ajuster l'abaissement du pH sur des valeurs inférieures à 6 ;
c) Traitement thermique subséquent (7) ;
d) Ajout dosé continuel, ensuite, d'une solution enzymatique (10), sachant que l'ajout de la solution enzymatique (10) a lieu à l'aide d'éléments mélangeurs statiques (11) dans le concentré lactique et/ou le concentré de protéines lactiques thermiquement traité(s) et acidifié(s) ;
e) Observation d'un temps d'attente dépendant du type d'enzyme (10) à incorporer, et incorporation du concentré acidulé et thermiquement traité dans un réacteur de gélification (9) ;
f) Le concentré lactique et/ou de protéines lactiques subit ensuite, dans le réacteur de gélification (9), pendant 0,5 à 5 minutes, une forte contrainte en cisaillement locale, très largement constante et uniforme, assortie de vitesses de cisaillement comprises entre 50 et 1000 t/s ;
g) A la suite de quoi, après cette période de séjour dans le réacteur de gélification (9), le système de produit gélifié sortant de ce dernier est déversé continuellement et en douceur et stocké temporairement et/ou partagé en portions et conditionné puis conduit vers un processus d'affinage.

2. Procédé selon la revendication 1, **caractérisé en ce que** la préconcentration s'effectue au moyen d'un procédé à diaphragme (microfiltration / ultrafiltration), et/ou par évaporation sous vide et/ou par incorporation de lait en poudre, par dispersion.

3. Procédé selon l'une ou plusieurs des revendications précédentes, **caractérisé en ce que** le gel est extrudé en continu du réacteur de gélification (9), sous forme de boudin lisse et sans rupture.

4. Procédé de fabrication continuelle de gels - induits par des enzymes - à base de protéines du lait, à l'aide d'une installation d'ultrafiltration (1) et/ou d'une installation d'évaporation sous vide (2) reliées via une conduite avec un réservoir de fermentation (5), une pompe refoulante étant prévue pour transférer le concentré vers ce réservoir de fermentation (5), et ledit réservoir de fermentation (5) étant équipé aussi bien d'un dispositif pour malaxer en douceur que pour disperser, et présentant un dispositif qui assure aussi bien l'ajout dosé de composants en poudre (lait en poudre, sel, épices) que de composants fluides pour aciduler le concentré, et ce réservoir étant relié par une autre conduite avec un réacteur de gélification en continu (9) qui présente trois zones fonctionnelles, une zone de séjour / mélange (1), une zone à haut cisaillement (II) avec éléments de cisaillement appropriés (15a, 15b, 15c) et une zone de sortie (III), sachant qu'en amont de l'entrée dans le réacteur de gélification (9), cette conduite est dotée d'un moyen d'ajout dosé à flux latéral de solution enzymatique, d'une pompe de dosage correspondante ainsi que d'un mélangeur statique (11) servant à incorporer les enzymes dans le concentré lactique acidulé, et sachant qu'un dispositif de modelage du gel est installé en aval du réacteur de gélification (9) et/ou est couplé à celui-ci.

5. Dispositif selon la revendication 4, **caractérisé en ce que** le réacteur de gélification (9) présente une zone de cisaillement (II) formée par un carter cylindrique et au moins un élément rotatif agencé centré ou excentré dans le cylindre de carter, et présente en outre des éléments incorporés corotatifs et raclant les parois et/ou provoquant un refoulement axial.

6. Dispositif selon la revendication 4 ou 5, **caractérisé en ce que** dans le réacteur de gélification (9) les trois zones fonctionnelles (I) à (III) sont créées par le fait qu'une pièce intérieure rotative présentant un diamètre intérieur de cylindre constant est installée dans le cylindre du carter, laquelle pièce intérieure présente, sur sa longueur, axialement, des variations de diamètre définies.

7. Dispositif selon l'une des revendications 4 à 6, **caractérisé en ce que** la pièce intérieure rotative présente, dans la zone de séjour / de mélange (I), un petit diamètre d'âme et des éléments mélangeurs en forme de tiges et de pales présentant une orientation radiale et qui, s'ils sont de section rectangulaire (en forme de feuille), présentent par rapport à l'axe longitudinal de l'élément rotatif un angle d'incidence tel que la rotation génère une composante de reflux, avec pour résultat un mélange homogène vers l'arrière dans la zone I (zone de séjour / mélange) du réacteur de gélification (9).

8. Dispositif selon la revendication 5 ou 6, **caractérisé en ce que** dans la zone à haut cisaillement (II) du réacteur de gélification (9), un interstice cylindrique étroit et concentrique se forme et qu'il est équipé en plus d'éléments corotatifs raclant contre la paroi extérieure et/ou générant un interstice étroit avec ladite paroi, sachant que ces éléments peuvent avoir la forme de lames à racler, de nervures en forme de vis sans fin et de géométries en colimaçon.

9. Dispositif selon l'une des revendications 5, 6 ou 8, **caractérisé en ce que** l'interstice de cisaillement présente des hauteurs ≥ à 1 mm et un rapport entre rayons Ri/Ra ≥ à 0,5.

10. Dispositif selon l'une des revendications 5, 6, 8 ou 9, **caractérisé en ce que** l'élément intérieur rotatif présente, dans la zone de sortie (III) du réacteur de gélification (9), une section conique allant en se rétrécissant selon un tracé linéaire ou concave / convexe pour se terminer en pointe.

11. Dispositif selon la revendication 10, **caractérisé en ce que** la pointe terminale de l'élément intérieur rotatif se trouve à une distance - en amont de la section constante du tube de modelage - équivalente au diamètre du cylindre intérieur de carter.

12. Dispositif selon l'une des revendications 5 à 11, **caractérisé en ce que** le carter extérieur présente, dans la zone de sortie (III) une section intérieure conique allant se rétrécissant selon un tracé linéaire ou convexe/concave, laquelle section intérieure permet de réaliser, avec le contour de la partie intérieure rotative, une interstice d'une valeur constante jusqu'à ce que soit atteinte la section de la zone de modelage (VI).

13. Dispositif selon l'une des revendications 5 à 12, **caractérisé en ce qu'**un tube de sortie (18) d'un diamètre constant prolonge de telle manière la zone de sortie (III) du réacteur de gélification (9) qu'il ne se forme aucune arête vive dans la zone de transition entre le cône et le tube.

14. Dispositif selon la revendication 13, **caractérisé en ce que** le tube de sortie (18) présente une section de forme quelconque et que sa longueur minimum représente dix fois le diamètre moyen dudit tube.

15. Dispositif selon la revendication 14, **caractérisé en ce que** le tube de sortie (18) décrit un coude à 90° (19) vers le haut à grand rayon (R ≥ à 5xD), et que la section d'un segment rectiligne du tube (20) - prolongeant le tube coudé (19), lequel tube (20) présente une longueur comprise entre un minimum de 10xD et un maximum de 60xD et provoque une compression du gel sous l'influence d'une pression hydrostatique en raison du poids propre du gel dans la zone de modelage - présente une forme que doit prendre la section du boudin de gel.

16. Dispositif selon l'une des revendications 5 à 15, **caractérisé en ce que** le réacteur de gélification (9) présente un carter à double paroi entourant le volume de réaction cylindrique et/ou unilatéralement conique, et **en ce que** cette double enveloppe peut être continuellement traversée par un fluide de thermostatisation.

17. Dispositif selon l'une des revendications 13 à 16, **caractérisé en ce que** le tube de sortie (18), le coude à 90° (19) et le tube (9) possèdent une double enveloppe pouvant être thermostatisé par un fluide.

18. Dispositif selon l'une des revendications 5 à 17, **caractérisé en ce que** les zones (I - III) du réacteur de gélification (9) sont configurées, en un maximum de trois étages séparés, avec un élément rotatif correspondant et un carter thermostatisé.

19. Dispositif selon l'une des revendications 5 à 17, **caractérisé en ce que** plusieurs éléments rotatifs agencés juxtaposés sont installés dans un carter adapté en conséquence dans les zones (I - III)
